(19)

Europäisches
Patentamt
European
Patent Office
Office européen
des brevets

(11) **EP 4 624 090 A1**

(12) **EUROPEAN PATENT APPLICATION**
published in accordance with Art. 153(4) EPC

(43) Date of publication:
**01.10.2025  Bulletin 2025/40**

(21) Application number: **23894600.8**

(22) Date of filing: **21.11.2023**

(51) International Patent Classification (IPC):
*B23K 35/30* (2006.01)

(52) Cooperative Patent Classification (CPC):
**B23K 35/30**

(86) International application number:
**PCT/JP2023/041863**

(87) International publication number:
**WO 2024/111595 (30.05.2024 Gazette 2024/22)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **24.11.2022   JP 2022187799**

(71) Applicant: **NIPPON STEEL CORPORATION**
**Chiyoda-ku**
**Tokyo 100-8071 (JP)**

(72) Inventors:
 • **KAMO, Takahiro**
   **Tokyo 100-8071 (JP)**

 • **MATSUO, Hajime**
   **Tokyo 100-8071 (JP)**
 • **KAYAMORI, Yoichi**
   **Tokyo 100-8071 (JP)**
 • **OKAWA, Teppei**
   **Tokyo 100-8071 (JP)**
 • **HOSHINO, Manabu**
   **Tokyo 100-8071 (JP)**
 • **NAMEGAWA, Tetsuya**
   **Tokyo 100-8071 (JP)**

(74) Representative: **Vossius & Partner**
**Patentanwälte Rechtsanwälte mbB**
**Siebertstrasse 3**
**81675 München (DE)**

(54) **STEEL MATERIAL, SOLID WIRE, AND STEEL SHEATH**

(57)     A steel material includes a chemical composition including from 0 to 0.650% of C, from 0.03 to 0.50% of Si, from 5 to 30% of Mn, from 0 to 0.050% of P, from 0 to 0.050% of S, from 0 to 5.0% of Cu, from 5 to 30% of Ni, from 0 to 10% of Cr, from 0 to 10% of Mo, from 0 to 1.00% of Nb, from 0 to 1.00% of V, from 0 to 1.0% of Co, from 0 to 10% of W, from 0 to 1.00% of Pb, from 0 to 1.00% of Sn, from 0 to 0.10% of Al, from 0 to 0.10% of Ti, from 0 to 0.100% of B, from 0 to 0.500% of N, from 0.001 to 0.010% of O, and the balance of Fe and impurities, in which [Ni] + [Mn] + [Cr] ≥ 15, [Ni] + [Mn] ≥ 15, and [Ni]/[Mn] ≥ 0.20 are satisfied in a case in which the amount of nickel in a steel sheath is designated [Ni], the amount of manganese in the steel sheath is designated [Mn], and the amount of chromium in the steel sheath is designated [Cr].

EP 4 624 090 A1

# EP 4 624 090 A1

**Description**

Technical Field

The present disclosure relates to a steel material, a solid wire, and a steel sheath.

Background Art

In recent years, tightening of regulations of the amounts of carbon dioxide emissions against the problems of global warming has resulted in an increase in demands for, for example, hydrogen fuels from which no carbon dioxide is emitted, and natural gases from which carbon dioxide emissions are low, in comparison with petroleums, coals, and the like. As a result, demands for construction of liquid hydrogen tanks, liquid carbon dioxide tanks, LNG tanks, and the like, used on ships, the ground, and the like, have also increased worldwide. For example, steels for low temperature such as Ni-based steels for low temperature including from 5 to 10% of Ni have been used as steel sheets used in such liquid hydrogen tanks, liquid carbon dioxide tanks, LNG tanks, and the like, due to demands for securing toughness at a cryogenic temperature of -196°C.

Weld metals have been formed by welding the Ni-based steels for low temperature by using austenitic weld materials allowing obtainment of weld metals excellent in low-temperature toughness. The weld materials have been designed to have, for example, a Ni content of around 70%.

For example, Patent Literature 1 discloses "A flux cored wire comprising a Ni-group alloy as a sheath, wherein the flux cored wire has a Ni content of from 35 to 70%, includes $TiO_2$, $SiO_2$, and $ZrO_2$ in a total amount of 4.0% by mass or more with respect to a total mass of the wire in flux, and further includes 0.6 to 1.2% by mass of a Mn oxide in terms of $MnO_2$, and $[TiO_2]/[ZrO_2]$ is from 2.3 to 3.3, $[SiO_2]/[ZrO_2]$ is from 0.9 to 1.5, and $([TiO_2] + [SiO_2] + [ZrO_2])/[MnO_2]$ is from 5 to 13 in a case in which contents of $TiO_2$, $SiO_2$, $ZrO_2$, and $MnO_2$ (equivalent amounts) are $[TiO_2]$, $[SiO_2]$, $[ZrO_2]$, and $[MnO_2]$ in terms of percentage by mass, respectively" as a weld wire for obtaining a weld material having a Ni content of around 70%.

In addition, Patent Literature 2 discloses "A solid wire for gas metal arc welding, comprising a composition comprising, in terms of percentage by mass, from 0.2 to 0.8% of C, from 0.15 to 0.90% of Si, from 17.0 to 28.0% of Mn, 0.03% or less of P, 0.03% or less of S, from 0.01 to 10.00% of Ni, from 0.4 to 4.0% of Cr, from 0.01 to 3.50% of Mo, less than 0.0010% of B, 0.12% or less of N, 0.04% or less of V, 0.04% or less of Ti, 0.04% or less of Nb, 1.0% or less of Cu, 0.1% or less of Al, 0.01% or less of Ca, 0.02% or less of REM, and a balance of Fe and unavoidable impurities" as a wire.

Patent Literature 3 discloses an expendable wire "comprising from 0.01 to 0.05% of carbon (C), from 0.1 to 1% of silicon (Si), from 5 to 9% of manganese (Mn), from 19 to 22% of chromium (Cr), from 15 to 18% of nickel (Ni), from 2.5 to 4.5% of molybdenum (Mo), from 0.1 to 0.2% of nitrogen (N), and a balance of iron (Fe), expressed in terms of percentage by a total weight of the wire".

Patent Literature 4 discloses "A weld material for a steel for cryogenic use, excellent in ductility-dip cracking resistance in a reheating portion, wherein the weld material includes, in terms of percentage by mass, 0.08% or less of C, 2.0% or less of Si, from 8.0 to 18.0% of Mn, from 12.5 to 20.0% of Ni, from 10.0 to 14.0% of Cr, from 2.0 to 7.0% of Mo, 0.20% or less of N, 0.005% or less of S, and a balance of iron and unavoidable impurities, and comprises P in a range of from 0.010 to 0.040% or B in a range of from 0.001 to 0.02%".

Patent Literature 5 discloses "A high Mn stainless steel weld wire for cryogenic use excellent in weld hot cracking resistance, wherein the high Mn stainless steel weld wire includes, in terms of percentage by mass, from 0.03 to 0.10% of C, from 0.01 to 0.50% of Si, from 18 to 30% of Mn, from 3 to 8% of Ni, from 12 to 18% of Cr, from 0.01 to 0.07% of Al, and from 0.10 to 0.28% of N, $34\% \leq Nieq + 0.8 \times Creq \leq 40\%$ (with proviso that $Nieq = Ni\% + 30 \times C\% + 30 \times N\% + 0.5 \times Mn\%$, and $Creq = Cr\% + Mo\% + 1.5 \times Si\% + 0.5 \times Nb\%$ are satisfied) is satisfied, P is regulated to 0.008% or less, S is regulated to 0.003% or less, $P\% + S\%$ is regulated to $P\% + S\% \leq 0.011\%$, O is regulated to 0.0050% or less, Pbeq is regulated to $Pbeq \leq 30 \times 10\text{-}4\%$ (with proviso that $Pbeq = Pb\% + 4 \times Bi\% + 0.01 \times Sn\% + 0.02 \times Sb\% + 0.007 \times As\%$ is satisfied), and the high Mn stainless steel weld wire may further comprise one or more of from 0.05 to 3.00% of Mo, from 0.01 to 0.20% of Nb, from 0.01 to 0.50% of V, from 0.01 to 1.00% of Ti, or from 0.0010 to 0.0035% of Ca as selectively added elements, and includes a balance of Fe and unavoidable impurities".

Patent Literature 6 discloses " A gas shield weld wire for austenitic stainless steel, wherein the gas shield weld wire includes, in terms of percentage by weight, 0.03% or less of C, from 0.1 to 1.0% of Si, from 5 to 20% of Mn, from 12 to 20% of Cr, from 5 to 12% of Ni, from 0.02 to 5.0% of Cu, and from 0.1 to 0.3% of N, and includes one or more of from 0.5 to 5.0% of Mo, from 0.5 to 5.0% of W, from 0.02 to 0.5% of Zr, from 0.02 to 0.5% of Ti, from 0.04 to 1.0% of Nb, or from 0.08 to 2.0% of V, P is regulated to 0.01% or less, S is regulated to 0.01% or less, PH expressed in Formula ($PH = Cr + Ni + Mo + 30C + 18N + 1.5Si + 0.5Nb$) is in a range of from 20 to 35, and the gas shield weld wire includesa balance of unavoidable impurities and iron".

Patent Literature 7 discloses "A wire for MIG arc welding of austenitic stainless steel, wherein the wire is a wire used in a case of MIG arc welding of austenitic stainless steel in pure inert gas shield air, and includes from 0.02 to 0.07% by weight of C, from 0.10 to 0.70% by weight of Si, from 6.0 to 10.0% by weight of Mn, from 15.0 to 20.0% by weight of Ni, from 15.0 to 20.0% by weight of Cr, from 2.0 to 4.0% by weight of Mo, from 0.03 to 0.30% by weight of a rare earth element, 0.015% by weight or less of P, 0.005% by weight or less of S, from 0.02 to 0.25% by weight of N, 0.010% by weight or less of O, and a balance of Fe and unavoidable impurities, and a ferrite factor D value (%) defined by the following Formula: $D = 3.2 \times ([Cr\%] + [Mo\%] + 1.5 \times [Si\%]) - 2.5 \times \{[Ni\%] + 0.5 \times [Mn\%] + 30 \times ([C\%] + [N\%])\} - 24$ is $-34.0 \leq D \leq -5$".

Citation List

Patent Literature

Patent Literature 1] Japanese Patent Application Laid-Open (JP-A) No. 2008-246507
Patent Literature 2: International Publication No. WO 2020/039643
Patent Literature 3: JP-A No. 2018-126789
Patent Literature 4: JP-A No. 2013-103232
Patent Literature 5: JP-A No. H10-166179
Patent Literature 6: JP-A No. H7-314178
Patent Literature 7: JP-A No. S62-197294

SUMMARY OF INVENTION

Technical Problem

A steel material for a weld material is very expensive in a case in which a large amount of Ni is allowed to be contained in the steel material which is a blank for a weld material such as a weld wire (in a case in which, for example, the content of Ni in the steel material is designed to be 70%) from the viewpoint of securing the low-temperature toughness of a weld metal. Therefore, an inexpensive steel material for a weld material is demanded.

Easy working in hot working in the case of working a steel material for a weld material into the shape of a weld material is important in the steel material. However, it has been difficult to secure easy working in hot working in a high-alloy steel material containing large amounts of alloy components. Welding of a weld material produced using a steel material poor in easy working (such as, for example, a steel sheath for a solid wire or a flux cored wire) may lead to unstable fracture in the case of imposing a local strain to the weld material. In other words, the weld material has been sometimes poor in stability for a weld material.

From the above viewpoint, the present disclosure addresses a problem of providing a steel material that is inexpensive and excellent in easy working in hot working, and providing a solid wire and a steel sheath having high stability for a weld material.

Solution to Problem

A solution to a problem includes the following aspects.

<1> A steel material, including a chemical composition including, in terms of percentage by mass with respect to a total mass of the steel material:

from 0 to 0.650% of C,
from 0.03 to 0.50% of Si,
from 5 to 30% of Mn,
from 0 to 0.050% of P,
from 0 to 0.050% of S,
from 0 to 5.0% of Cu,
from 5 to 30% of Ni,
from 0 to 10% of Cr,
from 0 to 10% of Mo,
from 0 to 1.00% of Nb,
from 0 to 1.00% of V,
from 0 to 1.0% of Co,
from 0 to 10% of W,

from 0 to 1.00% of Pb,
from 0 to 1.00% of Sn,
from 0 to 0.10% of Al,
from 0 to 0.10% of Ti,
from 0 to 0.100% of B,
from 0 to 0.500% of N,
from 0.001 to 0.010% of O, and
a balance of Fe and impurities,
wherein the following Formula (a), Formula (b), and Formula (c-1) are satisfied:

$$[Ni] + [Mn] + [Cr] \geq 15 \qquad \text{Formula (a);}$$

$$[Ni] + [Mn] \geq 15 \qquad \text{Formula (b);}$$

and

$$[Ni]/[Mn] \geq 0.20 \qquad \text{Formula (c-1)}$$

wherein, in Formula (a), Formula (b), and Formula (c-1), an amount of nickel in the steel material is designated [Ni], an amount of manganese in the steel material is designated [Mn], and an amount of chromium in the steel material is designated [Cr].

<2> The steel material according to <1>, wherein the steel material includes, in terms of percentage by mass with respect to the total mass of the steel material, at least one of:

from 0.001 to 0.050% of P,
from 0.0002 to 0.050% of S,
from 0.03 to 5.0% of Cu,
from 0.02 to 10% of Cr,
from 0.02 to 10% of Mo,
from 0.003 to 1.00% of Nb,
from 0.003 to 1.00% of V,
from 0.002 to 1.00% of Pb,
from 0.002 to 1.00% of Sn,
from 0.001 to 0.10% of Al,
from 0.002 to 0.10% of Ti,
from 0.0002 to 0.100% of B, or
from 0.002 to 0.500% of N.

<3> The steel material according to <1> or <2>, wherein the steel material includes, in terms of percentage by mass with respect to the total mass of the steel material, at least one of:

from 0 to 0.190% of C,
from 0.03 to 0.48% of Si,
from 5.2 to 30% of Mn,
from 6.2 to 30% of Ni, or
from 0.02 to 10% of Cr.

<4> The steel material according to <1> or <2>, wherein the steel material includes, in terms of percentage by mass with respect to the total mass of the steel material, at least one of:

from 5 to 20% of Mn, or
from 0 to 7% of Cr.

<5> The steel material according to <1> or <2>, wherein the following Formula (c-2) is satisfied:

$$[Ni]/[Mn] \geq 0.70 \qquad \text{Formula (c-2).}$$

<6> The steel material according to <1> or <2>, wherein the steel material is a steel ingot, a band steel, or a wire rod.

<7> The steel material according to <6>, wherein the steel material is a wire rod having a diameter of from 1.0 to 10.0 mm.

<8> The steel material according to <6>, wherein the steel material is a band steel having a sheet thickness of from 0.5 to 2.0 mm.

<9> A solid wire, including a chemical composition including, in terms of percentage by mass with respect to a total mass of the solid wire:

from 0 to 0.650% of C,
from 0.03 to 0.50% of Si,
from 5 to 30% of Mn,
from 0 to 0.050% of P,
from 0 to 0.050% of S,
from 0 to 5.0% of Cu,
from 5 to 30% of Ni,
from 0 to 10% of Cr,
from 0 to 10% of Mo,
from 0 to 1.00% of Nb,
from 0 to 1.00% of V,
from 0 to 1.0% of Co,
from 0 to 10% of W,
from 0 to 1.00% of Pb,
from 0 to 1.00% of Sn,
from 0 to 0.10% of Al,
from 0 to 0.10% of Ti,
from 0 to 0.100% of B,
from 0 to 0.500% of N,
from 0.001 to 0.010% of O, and
a balance of Fe and impurities,
wherein the following Formula (a), Formula (b), and Formula (c-1) are satisfied:

$$[Ni] + [Mn] + [Cr] \geq 15 \qquad \text{Formula (a)};$$

$$[Ni] + [Mn] \geq 15 \qquad \text{Formula (b)};$$

and

$$[Ni]/[Mn] \geq 0.20 \qquad \text{Formula (c-1)}$$

wherein, in Formula (a), Formula (b), and Formula (c-1), an amount of nickel in the solid wire is designated [Ni], an amount of manganese in the solid wire is designated [Mn], and an amount of chromium in the solid wire is designated [Cr].

<10> A steel sheath for a flux cored wire, the steel sheath including a chemical composition including, in terms of percentage by mass with respect to a total mass of the steel sheath:

from 0 to 0.650% of C,
from 0.03 to 0.50% of Si,
from 5 to 30% of Mn,
from 0 to 0.050% of P,
from 0 to 0.050% of S,
from 0 to 5.0% of Cu,
from 5 to 30% of Ni,
from 0 to 10% of Cr,
from 0 to 10% of Mo,
from 0 to 1.00% of Nb,
from 0 to 1.00% of V,
from 0 to 1.0% of Co,

from 0 to 10% of W,
from 0 to 1.00% of Pb,
from 0 to 1.00% of Sn,
from 0 to 0.10% of Al,
from 0 to 0.10% of Ti,
from 0 to 0.100% of B,
from 0 to 0.500% of N,
from 0.001 to 0.010% of O, and
a balance of Fe and impurities,
wherein the following Formula (a), Formula (b), and Formula (c-1) are satisfied:

$$[Ni] + [Mn] + [Cr] \geq 15 \qquad \text{Formula (a);}$$

$$[Ni] + [Mn] \geq 15 \qquad \text{Formula (b)}$$

; and

$$[Ni]/[Mn] \geq 0.20 \qquad \text{Formula (c-1)}$$

wherein, in Formula (a), Formula (b), and Formula (c-1), an amount of nickel in the steel sheath is designated [Ni], an amount of manganese in the steel sheath is designated [Mn], and an amount of chromium in the steel sheath is designated [Cr].

Advantageous Effects of Invention

In accordance with the present disclosure, a steel material that is inexpensive and excellent in easy working in hot working can be provided, and a solid wire and a steel sheath having high stability for a weld material can be provided.

DESCRIPTION OF EMBODIMENTS

An embodiment which is an example of the present disclosure is described.
In the present specification, a numerical range expressed by "x to y" means a range including the values of x and y as the lower and upper limit values, respectively, unless the values of x and y are expressed together with "more than" and "less than". A numerical range expressed by "x to y" means a range excluding the values of x and y as the lower and upper limit values, respectively, in a case in which the values of x and y are expressed together with "more than" and "less than".
In a numerical range expressed in a stepwise manner in the present specification, the upper limit value expressed in a certain numerical range expressed in a stepwise manner may be replaced by the upper limit value in another numerical range expressed in a stepwise manner, and may be replaced by values described in Examples. The lower limit value expressed in a certain numerical range in a stepwise manner may be replaced by the lower limit value in another numerical range expressed in a stepwise manner, and may be replaced by values described in Examples.
With regard to a content, "%" means "% by mass".
A case in which the content (%) of a component is "0 to" means that the component is an optional component, and need not be contained.

<Steel Material>

The chemical composition of the steel material according to the present disclosure is a specific composition.
The above-described configuration allows the steel material according to the present disclosure to be inexpensive and excellent in easy working in hot working.
The steel material according to the present disclosure was found based on the following findings.
A steel material which is a blank for a weld material such as a weld wire, that is, a steel material for a weld material requires an improved characteristic in a welded weld metal. For example, security of toughness at cryogenic temperature is required in a weld metal included in a liquid hydrogen tank, a liquid carbon dioxide tank, an LNG tank, or the like. Therefore, steel materials containing large amounts of Ni (for example, a steel material designed to have a Ni content of 70%) have been conventionally used as steel materials as blanks for weld materials from the viewpoint of securing the low-temperature toughness of weld metals. However, since Ni is an expensive element, a more inexpensive steel material for a weld material is demanded.
Thus, it is conceivable that Mn which is an austenite-stabilizing element, as with Ni, is used. In other words, a cost can be reduced by replacing some of Ni elements with Mn to reduce the amount of Ni.

Easy working in hot working in the case of working into the shape of a weld material (for example, the shape of a wire rod such as a solid wire, or the shape of a band steel such as a steel sheath in a flux cored wire) is important in a steel material for a weld material. However, it has been difficult to secure easy working in hot working, that is, deformation properties at high temperature in a steel material including high-alloy components containing large amounts of elements such as Ni and Mn, as described above.

Thus, the present inventors examined a technology to secure easy working in hot working in a steel material including high-alloy components containing large amounts of elements such as Ni and Mn.

As a result, it was found that easy working in hot working (that is, deformation properties at high temperature) can be secured by extremely enhancing the austenite fraction of a structure in a steel material (by preferably forming an austenitic single-phase) in a working temperature range (for example, at a temperature of 800°C or more). In addition, the chemical composition of the steel material for enhancing the austenite fraction of the structure was found.

The above findings reveal that the steel material for a weld material according to the present disclosure includes a specific chemical composition, and is therefore inexpensive and excellent in easy working in hot working.

Welding of a weld material produced using a steel material poor in easy working (such as, for example, a steel sheath for a solid wire or a flux cored wire) may lead to unstable fracture in the case of imposing a local strain to the weld material. In other words, the weld material has been sometimes poor in stability for a weld material. A weld material produced using a steel material poor in easy working has been possibly poor in feeding stability in feeding of the weld material to a weld point in welding, and the weld material has possibly lodged on the way, for example, in the feeding, or has been possibly broken.

However, the solid wire and steel sheath according to the present disclosure have high stability for a weld material. The solid wire according to the present disclosure and a flux cored wire including the steel sheath according to the present disclosure have excellent feeding stability.

The reason why requirements (requirements also including an optional requirement) for constituents in the steel material according to the present disclosure are limited is specifically described.

(Chemical Components of Steel Material)

The chemical components of the steel material according to the present disclosure are described below.

In descriptions of the chemical components of the steel material, "%" means "% by mass with respect to total mass of steel material" unless otherwise stated.

The chemical components of the steel material according to the present disclosure are

from 0 to 0.650% of C,
from 0.03 to 0.50% of Si,
from 5 to 30% of Mn,
from 0 to 0.050% of P,
from 0 to 0.050% of S,
from 0 to 5.0% of Cu,
from 5 to 30% of Ni,
from 0 to 10% of Cr,
from 0 to 10% of Mo,
from 0 to 1.00% of Nb,
from 0 to 1.00% of V,
from 0 to 1.0% of Co,
from 0 to 10% of W,
from 0 to 1.00% of Pb,
from 0 to 1.00% of Sn,
from 0 to 0.10% of Al,
from 0 to 0.10% of Ti,
from 0 to 0.100% of B,
from 0 to 0.500% of N,
from 0.001 to 0.010% of O, and
the balance of Fe and impurities.

In addition, the following Formula (a), Formula (b), and Formula (c-1): are satisfied:

$$[Ni] + [Mn] + [Cr] \geq 15 \qquad \text{Formula (a);}$$

$$[Ni] + [Mn] \geq 15 \qquad \text{Formula (b)}$$

; and

$$[Ni]/[Mn] \geq 0.20 \qquad \text{Formula (c-1)}$$

wherein, in Formula (a), Formula (b), and Formula (c-1), an amount of nickel in the steel material is designated [Ni], an amount of manganese in the steel material is designated [Mn], and an amount of chromium in the steel material is designated [Cr].

(From 0 to 0.650% of C)

C is an element that causes sputtering in welding. The lower content of C in the steel material is more advantageous for reducing sputtering. C is also an interstitial solid solution strengthening element. The excessive content of C in the steel material causes the steel material to be harder, easy working to deteriorate, and sputtering to increase.
Thus, the content of C in the steel material is set at from 0 to 0.650%.
However, a decarbonization cost rises by allowing the content of C in the steel material to be 0%. In addition, there is a concern that the content of C in the steel material is insufficient, and the strength of the weld metal is insufficient. Thus, the lower limit of the content of C in the steel material may be set at 0.010%, 0.020%, or 0.030%.
The upper limit of the content of C in the steel material is preferably 0.600%, 0.500%, 0.400%, 0.300%, 0.200%, less than 0.200%, 0.190%, 0.180%, 0.160%, 0.140%, 0.120%, or 0.100%.

(From 0.03 to 0.50% of Si)

Si is a deoxidizing element. The too low content of Si in the steel material results in an increase in the content of P in the steel material.
Si has low solid solubility in an austenite phase. Inclusion of a larger amount of Si results in generation of an embrittlement phase such as an intermetallic compound or $\delta$ ferrite at higher temperature, whereby high-temperature ductility is degraded.
Thus, the content of Si in the steel material is set at from 0.03 to 0.50%.
The lower limit of the content of Si in the steel material is preferably 0.04%, 0.05%, 0.06%, more than 0.06%, or 0.07%.
The upper limit of the content of Si in the steel material is preferably less than 0.50%, or 0.48%, 0.45%, 0.40%, 0.35%, 0.30%, or 0.20%.

(From 5 to 30% of Mn)

Mn is an element that causes an increase in the amount of fumes generated in welding. The lower content of Mn in the steel material is more advantageous for reducing the amount of generated fumes.
Mn is an austenite-stabilizing element. The too low content of Mn in the steel material results in the deterioration of easy working in hot working (that is, deformation properties at high temperature). In addition, austenitizing is inhibited from proceeding in a weld metal, whereby low-temperature toughness is degraded.
Thus, the content of Mn in the steel material is set at from 5 to 30%.
The lower limit of the content of Mn in the steel material is preferably more than 5%, 5.2%, 5.5%, 6%, more than 6%, 6.2%, 7%, more than 7%, 7.2%, 8%, 10%, more than 10.0%, or 10.2%.
The upper limit of the content of Mn in the steel material is preferably 28%, 26%, 24%, 22%, 20%, 18%, less than 15%, 14.8%, less than 12.3%, or 12.1%.

(From 0 to 0.050% of P)

P is an impurity element, and results in the deterioration of the toughness of a weld metal, and therefore, it is preferable to minimize the content of P in the steel material. Thus, the lower limit of the content of P in the steel material is set at 0%. However, the content of P in the steel material is preferably 0.001% or more, and more preferably 0.003% or more from the viewpoint of reducing a dephosphorization cost.
In a case in which the content of P in the steel material is 0.050% or less, the adverse effect of P on the toughness is allowed to be in a permissible range.
Thus, the content of P in the steel material is set at from 0 to 0.050%.

For effectively suppressing the deterioration of the toughness of a weld metal, it is preferable that the content of P in the steel material is 0.040% or less, 0.030% or less, 0.020% or less, or 0.015% or less.

(From 0 to 0.050% of S)

S is an impurity element, and results in the deterioration of the toughness of a weld metal, and therefore, it is preferable to minimize the content of S in the steel material. Thus, the lower limit of the content of S in the steel material is set at 0%. However, the content of S in the steel material is preferably 0.0002% or more, and more preferably 0.0003% or more from the viewpoint of reducing a desulfurization cost.

In a case in which the content of S in the steel material is 0.050% or less, the adverse effect of S on the toughness is allowed to be in a permissible range.

Thus, the content of S in the steel material is set at from 0 to 0.050%.

For effectively suppressing the deterioration of the toughness of a weld metal, it is preferable that the content of S in the steel material is 0.040% or less, 0.030% or less, 0.020% or less, 0.015% or less, 0.010% or less, or 0.005% or less.

(From 0 to 5.0% of Cu)

Cu is a precipitation strengthening element, and may be allowed to be contained in the steel material in order to improve the strength of a weld metal. Cu is an austenite-stabilizing element, and may be allowed to be contained in the steel material in order to the low-temperature toughness of a weld metal. The excessive content of Cu in the steel material results in saturation of the effect described above. The excessive content of Cu in the steel material causes the steel material to be harder and easy working to deteriorate.

Thus, the content of Cu in the steel material is set at from 0 to 5.0%. However, Cu may be contained as an impurity element, and the content of Cu in the steel material may be 0.03% or more.

The lower limit of the content of Cu in the steel material is preferably 0.1%, 0.2%, or 0.3%.

The upper limit of the content of Cu in the steel material is preferably 4.5%, 4.0%, or 3.5%.

(From 5 to 30% of Ni)

Ni is an austenite-stabilizing element. The too low content of Ni in the steel material results in the deterioration of easy working in hot working (that is, deformation properties at high temperature). In addition, austenitizing is inhibited from proceeding in a weld metal, whereby low-temperature toughness is degraded.

An increase in the content of Ni in the steel material results in an increase in the cost of the steel material.

Thus, the content of Ni in the steel material is set at from 5 to 30%.

The lower limit of the content of Ni in the steel material is preferably 5.5%, 6%, more than 6%, 6.2%, 8%, more than 8%, 8.2%, 10%, more than 10%, or 10.2%.

The upper limit of the content of Ni in the steel material is preferably 28%, 26%, 24%, 22%, or 20%.

(From 0 to 10% of Cr)

Cr is an austenite-stabilizing element, and may be allowed to be contained in the steel material, for easy working in hot working, and for improvement in the low-temperature toughness of a weld metal.

The excessive content of Cr in the steel material results in formation of a martensite structure in the steel material, whereby easy working deteriorates. The excessive content of Cr in the steel material results in an increase in the amount of a low-melting-point compound in a molten metal, and in further widening of the solid-liquid coexistence temperature range of the molten metal, and is therefore prone to cause hot cracking.

Thus, the content of Cr in the steel material is set at from 0 to 10%.

The lower limit of the content of Cr in the steel material is preferably 0.01%, 0.02%, 0.1%, 0.5%, 1%, 2%, 3%, 4%, or 5%.

The upper limit of the content of Cr in the steel material is preferably 9%, 8%, less than 8%, 7.8%, 7%, less than 6%, or 5.8%.

(From 0 to 10% of Mo)

Mo is a precipitation strengthening element, and may be allowed to be contained in the steel material in order to improve the strength of a weld metal. The excessive content of Mo in the steel material causes the steel material to be harder and easy working to deteriorate. The excessive content of Mo in the steel material results in the excessive strength of a weld metal, whereby low-temperature toughness deteriorates.

Thus, the content of Mo in the steel material is set at from 0 to 10%.

The lower limit of the content of Mo in the steel material is preferably 0.02%, 0.1%, 0.5%, 1%, 1.5%, or 2%.

The upper limit of the content of Mo in the steel material is preferably, 9%, 8%, or 7%.

(From 0 to 1.00% of Nb)

Nb is an element that forms a carbide in a weld metal to increase the strength of the weld metal, and may be therefore allowed to be contained in the steel material.

The excessive content of Nb in the steel material causes the steel material to be harder and easy working to deteriorate. The excessive content of Nb in the steel material may cause hot cracking of the weld metal.

Thus, the content of Nb in the steel material is set at from 0 to 1.00%.

The lower limit of the content of Nb in the steel material is preferably 0.003%, 0.01%, 0.02%, or 0.03%.

The upper limit of the content of Nb in the steel material is preferably 0.80%, 0.60%, 0.40%, 0.20%, or 0.10%.

(From 0 to 1.00% of V)

V is an element that forms a carbonitride in a weld metal to increase the strength of the weld metal, and may be therefore allowed to be contained in the steel material.

The excessive content of V in the steel material causes the steel material to be harder and easy working to deteriorate. The excessive content of V in the steel material may cause hot cracking of the weld metal.

Thus, the content of V in the steel material is set at from 0 to 1.00%. However, V may be contained as an impurity element, and the content of V in the steel material may be 0.003% or more.

The lower limit of the content of V in the steel material is preferably 0.01%, 0.02%, or 0.03%. The upper limit of the content of V in the steel material is preferably 0.80%, 0.60%, 0.40%, 0.20%, or 0.10%.

(From 0 to 1.0% of Co)

Co is an element that increases the strength of a weld metal by solid solution strengthening, and may be therefore allowed to be contained in the steel material.

The excessive content of Co in the steel material causes the steel material to be harder and easy working to deteriorate. In addition, the excessive content of Co in the steel material results in the deterioration of the ductility of the weld metal, and precludes the security of toughness.

Thus, the content of Co in the steel material is set at from 0 to 1.0%.

The lower limit of the content of Co in the steel material is preferably 0.01%, 0.05%, 0.08%, or 0.1%.

The upper limit of the content of Co in the steel material is preferably 0.9%, 0.8%, 0.7%, or 0.6%.

(From 0 to 10% of W)

W is a solid solution strengthening element, and may be allowed to be contained in order to improve strength.

The excessive content of W results in excessive high-temperature strength, whereby toughness deteriorates in a weld metal.

Thus, the content of W in the steel material is set at from 0 to 10%.

The lower limit of the content of W in the steel material is preferably 0.5%, 1%, 1.5%, or 2%.

The upper limit of the content of W in the steel material is preferably 9%, 8%, 7%, or 6%.

(From 0 to 1.00% of Pb)

Pb is effective at improving toe moldability between a base material (for example, steel sheet) and a weld metal in the case of welding, to improve the machinability of the weld metal, and may be therefore allowed to be contained in the steel material.

The excessive content of Pb in the steel material results in the degradation of an arc state, whereby sputtering increases.

Thus, the content of Pb in the steel material is set at from 0 to 1.00%.

The lower limit of the content of Pb in the steel material is preferably 0.002%, 0.01%, 0.02%, or 0.03%.

The upper limit of the content of Pb in the steel material is preferably 0.90%, 0.80%, 0.70%, or 0.60%.

(From 0 to 1.00% of Sn)

Sn is an element that improves the corrosion resistance of a weld metal, and may be therefore allowed to be contained in the steel material.

The excessive content of Sn in the steel material may result in cracking in the weld metal.

Thus, the content of Sn in the steel material is set at from 0 to 1.00%.

The lower limit of the content of Sn in the steel material is preferably 0.002%, 0.01%, 0.02%, 0.03%, 0.04%, or 0.05%.

The upper limit of the content of Sn in the steel material is preferably 0.80%, 0.60%, 0.40%, 0.20%, or 0.10%.

(From 0 to 0.10% of Al)

Al is a deoxidizing element, and may be allowed to be contained in the steel material in order to suppress a weld defect and to improve the cleanliness of a weld metal.

The excessive content of Al in the steel material results in generation of coarse inclusions in the steel material, whereby easy working deteriorates. In addition, the excessive content of Al in the steel material results in formation of a nitride or an oxide in the weld metal by Al, whereby the low-temperature toughness of the weld metal may deteriorate.

Thus, the content of Al in the steel material is set at from 0 to 0.10%.

The lower limit of the content of Al in the steel material is preferably 0.001 %, 0.01%, 0.02%, or 0.03%.

The upper limit of the content of Al in the steel material is preferably 0.09%, 0.08%, or 0.07%.

(From 0 to 0.10% of Ti)

Ti is a deoxidizing element, and may be allowed to be contained in the steel material in order to suppress a weld defect and to improve the cleanliness of a weld metal.

The excessive content of Ti in the steel material results in generation of coarse inclusions in the steel material, whereby easy working deteriorates. In addition, the excessive content of Ti in the steel material results in generation of a carbide in the weld metal, whereby the toughness of the weld metal may be degraded.

Thus, the content of Ti in the steel material is set at from 0 to 0.10%.

The lower limit of the content of Ti in the steel material is preferably 0.002%, 0.01%, 0.015%, or 0.02%.

The upper limit of the content of Ti in the steel material is preferably 0.09%, 0.08%, 0.07%, 0.06%, or 0.05%.

(From 0 to 0.100% of B)

B is an austenite-stabilizing element, and also an interstitial solid solution strengthening element, and may be allowed to be contained in the steel material, for easy working in hot working, and for improvement in the low-temperature toughness and strength of a weld metal.

The excessive content of B in the steel material causes the steel material to be harder and easy working to deteriorate. The excessive content of B in the steel material results in the precipitation of $M_{23}(C, B)_6$, causing the degradation of toughness.

Thus, the content of B in the steel material is set at from 0 to 0.100%.

The lower limit of the content of B in the steel material is preferably 0.0002%, 0.0003%, 0.0005%, 0.0008%, or 0.001%.

The upper limit of the content of B in the steel material is preferably 0.080%, 0.060%, 0.040%, 0.020%, or 0.010%.

(From 0 to 0.500% of N)

N is an austenite-stabilizing element, and also an interstitial solid solution strengthening element, and may be allowed to be contained in the steel material, for easy working in hot working, and for improvement in the low-temperature toughness and strength of a weld metal.

The excessive content of N in the steel material causes the steel material to be harder and easy working to deteriorate. In addition, the excessive content of N in the steel material results in the increasing occurrence of blow, causing a weld defect.

Thus, the content of N in the steel material is set at from 0 to 0.500%. However, N may be contained as an impurity element, and the content of N in the steel material may be 0.002% or more.

The lower limit of the content of N in the steel material is preferably 0.001%, 0.0015%, or 0.002%.

The upper limit of the content of N in the steel material is preferably 0.400%, 0.300%, 0.200%, 0.100%, 0.050%, or 0.015%.

(From 0.001 to 0.010% of O)

O is contained as an impurity in the steel. However, since the excessive content of O causes the degradation of workability and high-temperature ductility, the upper limit of the content of O is set at 0.010% or less.

Since an extreme reduction in the content of O causes a production cost to rise, the lower limit of the content of O in the steel material is set at 0.001% or more.

The lower limit of the content of O in the steel material is preferably 0.0015% or 0.002%.

The upper limit of the content of O in the steel material is preferably 0.008%, 0.006%, or 0.004%.

(Balance of Fe and Impurities)

The other balance components in the chemical components of the steel material are Fe and impurities.

The impurities mean components which are mixed due to a raw material such as an ore or a scrap, or the various causes of a production step in the case of industrially producing a steel material, and which are acceptable as long as the characteristics of the steel material are not adversely affected.

(Other Elements)

The steel material according to the present disclosure may further include at least one element selected from the group consisting of Ca, REM, and Mg in the following contents:

Ca: from 0 to 0.10%;
REM: from 0 to 0.10%; and
Mg: from 0 to 0.10%, respectively, instead of the above-described Fe as the balance.

The lower limit of the content of Ca in the steel material is preferably 0.0003% or 0.0008%. The upper limit of the content of Ca in the steel material is preferably 0.008% or 0.006%.

The lower limit of the content of REM in the steel material is preferably 0.0003% or 0.0008%. The upper limit of the content of REM in the steel material is preferably 0.008% or 0.006%.

The lower limit of the content of Mg in the steel material is preferably 0.0003% or 0.0008%. The upper limit of the content of Mg in the steel material is preferably 0.008% or 0.006%.

"REM" is the generic name of 17 elements in total of Sc, Y, and lanthanoids. Only one kind of REM may be included, or two or more kinds of REM may be included. In the case of containing two or more kinds of REM, the content thereof refers to the total content of the REM. Commonly, REM is contained in a misch metal. Therefore, for example, REM may be contained in the form of a misch metal so that the total content of the REM is in the range described above.

(Total ([Ni] + [Mn] + [Cr]) of Contents of Mn, Ni, and Cr in Steel Material)

Each of Mn, Ni, or Cr is an austenite-stabilizing element, improves easy working (that is, deformation properties at high temperature) in hot working, and improves the low-temperature toughness of a weld metal. In this regard, in a case in which the amount of manganese in the steel material is designated [Mn], the amount of nickel in the steel material is designated [Ni], and the amount of chromium in the steel material is designated [Cr], the steel material satisfies the following Formula (a):

$$[Ni] + [Mn] + [Cr] \geq 15 \qquad \text{Formula (a)}.$$

In other words, the total ([Ni] + [Mn] + [Cr]) of the contents of Mn, Ni, and Cr in the steel material is set at 15% or more.

The total ([Ni] + [Mn] + [Cr]) of the contents of Mn, Ni, and Cr in the steel material is more preferably 18% or more, 20% or more, or 23% or more.

An excessive increase in Mn causes an increase in the amount of fumes generated in welding. Therefore, from the viewpoint of reducing the cost of a weld metal and suppressing fumes in welding, it is preferable that the total ([Ni] + [Mn] + [Cr]) of the contents of Mn, Ni, and Cr is set at 60% or less while the contents of Mn, Ni, and Cr in the steel material satisfy the above-described ranges, respectively. The total ([Ni] + [Mn] + [Cr]) of the contents of Mn, Ni, and Cr in the steel material is more preferably 50% or less, 40% or less, or 35% or less.

(Total ([Ni] + [Mn]) of Contents of Mn and Ni in Steel Material)

Each of Mn or Ni is an austenite-stabilizing element, improves easy working (that is, deformation properties at high temperature) in hot working, and improves the low-temperature toughness of a weld metal. In this regard, in a case in which the amount of nickel in the steel material is designated [Ni], and the amount of manganese in the steel material is designated [Mn], the steel material satisfies the following Formula (b):

$$[Ni] + [Mn] \geq 15 \qquad \text{Formula (b).}$$

In other words, the total ([Ni] + [Mn]) of the contents of Mn and Ni in the steel material is set at 15% or more.
The total ([Ni] + [Mn]) of the contents of Mn and Ni in the steel material is more preferably 18% or more, 20% or more, or 23% or more.
An excessive increase in Mn causes an increase in the amount of fumes generated in welding. Therefore, from the viewpoint of reducing the cost of a weld metal and suppressing fumes in welding, it is preferable that the total ([Ni] + [Mn]) of the contents of Mn and Ni is set at 60% or less while the contents of Mn and Ni in the steel material satisfy the above-described ranges, respectively. The total ([Ni] + [Mn]) of the contents of Mn and Ni in the steel material is more preferably 50% or less, 40% or less, or 35% or less.

(Mass Ratio ([Ni]/[Mn]) between Mn Content and Ni Content)

Each of Mn or Ni is an austenite-stabilizing element, improves easy working (that is, deformation properties at high temperature) in hot working, and improves the low-temperature toughness of a weld metal. An excessive increase in Mn causes an increase in the amount of fumes generated in welding. In these regards, in a case in which the amount of nickel in the steel material is designated [Ni], and the amount of manganese in the steel material is designated [Mn], the steel material satisfies the following Formula (c-1):

$$[Ni]/[Mn] \geq 0.20 \qquad \text{Formula (c-1).}$$

In other words, the mass ratio ([Ni]/[Mn]) between the contents of Mn and Ni in the steel material is set at 0.20 or more.
The lower limit of the mass ratio ([Ni]/[Mn]) between the contents of Mn and Ni in the steel material is more preferably 0.30, 0.50, 0.60, 0.70, 0.80, or 1.00.
It is more preferable to satisfy the following Formula (c-2), and it is particularly preferable to satisfy the following Formula (c-3). Charpy impact properties and CTOD properties in a weld metal deteriorate in a case in which the mass ratio ([Ni]/[Mn]) is less than 0.20. In contrast, the above-described properties in the weld metal are improved in a case in which the mass ratio ([Ni]/[Mn]) is 0.20 or more. Furthermore, the above-described properties in the weld metal are particularly favorably enhanced in a case in which the mass ratio ([Ni]/[Mn]) is 0.70 or more.

$$[Ni]/[Mn] \geq 0.70 \qquad \text{Formula (c-2).}$$

$$[Ni]/[Mn] \geq 1.00 \qquad \text{Formula (c-3).}$$

Since Ni is an expensive metal, the upper limit of the mass ratio ([Ni]/[Mn]) between the contents of Mn and Ni in the steel material is preferably 10.00, 8.00, or 5.00 from the viewpoint of improving easy working in hot working while reducing the cost of the steel material.

(Austenite Fraction of Steel Material)

The enhancement of the proportion of austenite in the structure of the steel material is preferred for enhancing low-temperature toughness in a weld metal. Therefore, the austenite fraction of the steel material is preferably 70% or more. The austenite fraction is more preferably 80% or more, or 90% or more, or may be 100%. The balance of the structure is martensite.
The austenite fraction can be controlled to be 70% or more by satisfying Formula (a) ([Ni] + [Mn] + [Cr] $\geq$ 15), Formula (b) ([Ni] + [Mn] $\geq$ 15), and Formula (c-1) ([Ni]/[Mn] $\geq$ 0.20) as described above.
The austenite fraction in the structure of the steel material can be determined by the following method.
Samples are collected from the steel material, bcc contents (area%) on surfaces of the samples are measured by a magnetic induction method using an FERITSCOPE (registered trademark) FMP30 (manufactured by FISCHER INSTRUMENTS K.K.) using a probe (FGAB 1.3-Fe) manufactured by FISCHER INSTRUMENTS K.K. as a probe for the measurement instrument, and the arithmetic mean value of the measured bcc contents is determined. The determined value is regarded as a martensite volume fraction (%) in the structure. The austenite fraction (%) in the structure of the steel material is determined using the obtained martensite volume fraction on the basis of the following Formula.

$$\text{Austenite fraction} = 100 - \text{martensite volume fraction}$$

(Tensile Strength and Drawing Value at High Temperature)

The steel material according to the present disclosure is excellent in easy working in hot working. For the index thereof, a tensile strength at 800°C is preferably 300 MPa or less. The tensile strength is still more preferably 280 MPa or less, or 250 MPa or less.

The lower limit of the tensile strength at 800°C may be, for example, 100 MPa or more, without particular limitation.

It is preferable that a drawing value at 800°C is 40% or more. The drawing value is still more preferably 45% or more, or 50% or more.

The upper limit of the drawing value at 800°C may be, for example, 100% or less, without particular limitation.

The tensile strength and the drawing value at 800°C are measured using a hot tensile tester. A small test piece having a diameter of 10 mm and a parallel portion length of 110 mm was collected from the steel material, heated at 20°C/sec to increase the temperature of the small test piece to 1200°C, and retained for 10 minutes. The temperature of the small test piece is decreased to a predetermined temperature (800°C) at 5°C/sec, the small test piece is retained for 30 seconds, and then subjected to tensile fracture at a strain rate of 20 mm/sec, and the tensile strength and the drawing value are determined. The width of a heating zone is set at 110 mm.

(Form of Steel Material)

The steel material according to the present disclosure is used as a blank for a weld material. In other words, the steel material is worked to produce a weld material (for example, a solid wire, a flux cored wire, or the like).

Examples of the form of the steel material according to the present disclosure include steel ingots, band steels, and wire rods. Such a steel ingot is a blank for hot rolling, and such a wire rod or a band steel is the intermediate blank of a steel ingot and a weld material.

In a case in which the steel material is a wire rod, the diameter of the wire rod is preferably from 1.0 to 10.0 mm, and more preferably from 2.0 to 6.0 mm from the viewpoint of workability into a weld material (for example, a solid wire).

In a case in which the steel material is a band steel, the width of the band steel is preferably from 10 to 20 mm from the viewpoint of workability into a weld material (particularly, a steel sheath in a flux cored wire). It is preferable that the thickness of the band steel is, for example, from 0.5 to 2.0 mm.

(Solid Wire and Steel Sheath)

The chemical composition of the solid wire according to the present disclosure is as follows in terms of percentage by mass with respect to the total mass of the solid wire.

The chemical composition of the steel sheath for a flux cored wire according to the present disclosure is as follows in terms of percentage by mass with respect to the total mass of the steel sheath.

From 0 to 0.650% of C,
from 0.03 to 0.50% of Si,
from 5 to 30% of Mn,
from 0 to 0.050% of P,
from 0 to 0.050% of S,
from 0 to 5.0% of Cu,
from 5 to 30% of Ni,
from 0 to 10% of Cr,
from 0 to 10% of Mo,
from 0 to 1.00% of Nb,
from 0 to 1.00% of V,
from 0 to 1.0% of Co,
from 0 to 10% of W,
from 0 to 1.00% of Pb,

from 0 to 1.00% of Sn,
from 0 to 0.10% of Al,
from 0 to 0.10% of Ti,
from 0 to 0.100% of B,
from 0 to 0.500% of N,
from 0.001 to 0.010% of O, and
the balance of Fe and impurities.

The solid wire according to the present disclosure satisfies the following Formula (a), Formula (b), and Formula (c-1) in a case in which the amount of nickel in the solid wire is designated [Ni], the amount of manganese in the solid wire is designated [Mn], and the amount of chromium in the solid wire is designated [Cr].
The steel sheath for a flux cored wire according to the present disclosure satisfies the following Formula (a), Formula (b), and Formula (c-1) in a case in which the amount of nickel in the steel sheath is designated [Ni], the amount of manganese in the steel sheath is designated [Mn], and the amount of chromium in the steel sheath is designated [Cr].

$$[Ni] + [Mn] + [Cr] \geq 15 \qquad \text{Formula (a)}$$

$$[Ni] + [Mn] \geq 15 \qquad \text{Formula (b)}$$

$$[Ni]/[Mn] \geq 0.20 \qquad \text{Formula (c-1)}$$

The solid wire and steel sheath according to the present disclosure have high stability for a weld material. The solid wire according to the present disclosure and a flux cored wire including the steel sheath according to the present disclosure have excellent feeding stability.

Examples

The feasibility and effects of the present disclosure are described in more detail below with reference to Invention Examples and Comparative Examples. However, the following Examples are not limited to the present disclosure, and changes thereto in view of the gist described above and below are encompassed within the technical scope of the present disclosure.

(Preparation of Steel Material)

Steel materials having chemical components set forth in Table 1 were prepared as steel materials in Invention Examples and Comparative Examples.

(Tensile Strength and Drawing Value at High Temperature)

The tensile strengths and drawing values of the steel materials in Invention Examples and Comparative Examples were determined using a hot tensile tester. A small test piece having a diameter of 10 mm and a parallel portion length of 110 mm was collected from each of the steel materials, heated at 20°C/sec to increase the temperature of the small test piece to 1200°C, and retained for 10 minutes. The temperature of the small test piece was decreased to 800°C at 5°C/sec, the small test piece was retained for 30 seconds, and then subjected to tensile fracture at a strain rate of 20 mm/sec, and the tensile strength and the drawing value were determined. The width of a heating zone was set at 110 mm.
A tensile strength of 300 MPa or less was regarded as "acceptable", and a tensile strength of more than 300 MPa was regarded as "unacceptable".
A drawing value of 40% or more was regarded as "acceptable", and a drawing value of less than 40% was regarded as "unacceptable".

[Table 1]

| Table 1-1 | | | | | | | | | | | | | | | |
|---|---|---|---|---|---|---|---|---|---|---|---|---|---|---|---|
| Number | Chemical components (% by mass) of steel material (balance of Fe and impurities) | | | | | | | | | | | | | | |
| | C | Si | Mn | P | S | Cu | Ni | Cr | Mo | Nb | V | Co | W | Pb | Sn |
| 1 | 0.030 | 0.10 | 10 | 0.015 | 0.005 | 0 | 15 | 5 | 2 | 0 | 0 | 0 | 0 | 0 | 0 |

(continued)

| Table 1-1 | | | | | | | | | | | | | | | |
|---|---|---|---|---|---|---|---|---|---|---|---|---|---|---|---|
| Number | Chemical components (% by mass) of steel material (balance of Fe and impurities) | | | | | | | | | | | | | | |
| | C | Si | Mn | P | S | Cu | Ni | Cr | Mo | Nb | V | Co | W | Pb | Sn |
| 2 | 0.100 | 0.06 | 10 | 0.010 | 0.003 | 0 | 18 | 7 | 5 | 0 | 0 | 0 | 0 | 0 | 0 |
| 3 | 0.090 | 0.20 | 18 | 0.009 | 0.003 | 3.5 | 15 | 0 | 0 | 0 | 0 | 0 | 0 | 0 | 0 |
| 4 | 0.050 | 0.10 | 15 | 0.004 | 0.002 | 0 | 20 | 0 | 2 | 0 | 0.10 | 0 | 0 | 0 | 0.05 |
| 5 | 0.100 | 0.06 | 10 | 0.012 | 0.005 | 0 | 13 | 7 | 4 | 0 | 0 | 0.6 | 6 | 0 | 0.10 |
| 6 | 0.030 | 0.20 | 12 | 0.009 | 0.003 | 0 | 15 | 5 | 2 | 0.10 | 0 | 0 | 6 | 0.03 | 0 |
| 7 | 0.200 | 0.10 | 15 | 0.003 | 0.005 | 0 | 13 | 5 | 2 | 0 | 0 | 0 | 2 | 0.60 | 0 |
| 8 | 0.200 | 0.06 | 10 | 0.012 | 0.002 | 0 | 13 | 7 | 2 | 0.03 | 0 | 0 | 0 | 0 | 0 |
| 9 | 0.300 | 0.06 | 10 | 0.008 | 0.001 | 0.3 | 15 | 5 | 2 | 0 | 0.03 | 0 | 0 | 0 | 0 |
| 10 | 0.500 | 0.06 | 10 | 0.004 | 0.002 | 0 | 18 | 7 | 5 | 0 | 0 | 0.1 | 0 | 0 | 0 |
| 11 | 0.520 | 0.20 | _4_ | 0.012 | 0.003 | 0 | 10 | 5 | 5 | 0 | 0 | 0 | 0 | 0 | 0 |
| 12 | 0.120 | 0.20 | _32_ | 0.013 | 0.010 | 0 | 7 | 0 | 4 | 0 | 0 | 0 | 0 | 0 | 0 |
| 13 | 0.510 | 0.20 | 25 | 0.007 | 0.004 | 0 | _4_ | 7 | 5 | 0 | 0 | 0 | 0 | 0 | 0 |
| 14 | 0.490 | 0.06 | 9 | 0.012 | 0.005 | 2.0 | 5 | _12_ | 4 | 0 | 0 | 0 | 0 | 0 | 0 |
| 15 | 0.500 | 0.06 | _4_ | 0.012 | 0.005 | 0 | _4_ | 5 | 4 | 0 | 0 | 0 | 0 | 0 | 0 |
| 16 | _0.680_ | 0.20 | 12 | 0.009 | 0.003 | 0 | 15 | 5 | 2 | 0 | 0 | 0 | 0 | 0 | 0 |
| 17 | 0.450 | 0.06 | 15 | 0.010 | 0.003 | 0 | 8 | _11_ | 5 | 0 | 0 | 0 | 0 | 0 | 0 |
| 18 | 0.430 | 0.06 | 10 | 0.012 | 0.005 | 0 | 13 | 7 | _11_ | 0 | 0 | 0 | 0 | 0 | 0 |

[Table 2]

| Table 1-2 | | | | | | | | | | |
|---|---|---|---|---|---|---|---|---|---|---|
| Number | Chemical components (% by mass) of steel material (balance of Fe and impurities) | | | | | | | | Austenite fraction | Remarks |
| | Al | Ti | B | N | O | [Ni]+[Mn]+[Cr] | [Ni]+[Mn] | [Ni]/[Mn] | | |
| 1 | 0.03 | 0 | 0 | 0.005 | 0.002 | 30 | 25 | 1.50 | 100 | Invention Example |
| 2 | 0 | 0 | 0 | 0.005 | 0.002 | 35 | 28 | 1.80 | 100 | Invention Example |
| 3 | 0.03 | 0 | 0 | 0.005 | 0.002 | 33 | 33 | 0.83 | 100 | Invention Example |
| 4 | 0.01 | 0 | 0.003 | 0.005 | 0.002 | 35 | 35 | 1.33 | 100 | Invention Example |
| 5 | 0.04 | 0.04 | 0 | 0.005 | 0.002 | 30 | 23 | 1.30 | 100 | Invention Example |
| 6 | 0.05 | 0 | 0.006 | 0.005 | 0.002 | 32 | 27 | 1.25 | 100 | Invention Example |
| 7 | 0.03 | 0.02 | 0 | 0.005 | 0.002 | 33 | 28 | 0.87 | 100 | Invention Example |
| 8 | 0.01 | 0 | 0 | 0.005 | 0.002 | 30 | 23 | 1.30 | 100 | Invention Example |

(continued)

| Table 1-2 | | | | | | | | | | | |
|---|---|---|---|---|---|---|---|---|---|---|---|
| Number | Chemical components (% by mass) of steel material (balance of Fe and impurities) | | | | | | | | | Austenite fraction | Remarks |
| | Al | Ti | B | N | O | [Ni]+[Mn]+[Cr] | [Ni]+[Mn] | [Ni]/[Mn] | | |
| 9 | 0.03 | 0 | 0 | 0.005 | 0.002 | 30 | 25 | 1.50 | 100 | Invention Example |
| 10 | 0 | 0 | 0 | 0.005 | 0.002 | 35 | 28 | 1.80 | 100 | Invention Example |
| 11 | 0 | 0 | 0 | 0.005 | 0.003 | 19 | <u>14</u> | 2.50 | 70 | Comparative Example |
| 12 | 0 | 0 | 0 | 0.003 | 0.002 | 39 | 39 | 0.22 | 70 | Comparative Example |
| 13 | 0 | 0 | 0 | 0.002 | 0.002 | 36 | 29 | <u>0.16</u> | 100 | Comparative Example |
| 14 | 0 | 0 | 0 | 0.005 | 0.002 | 26 | <u>14</u> | 0.56 | 100 | Comparative Example |
| 15 | 0 | 0 | 0 | 0.005 | 0.002 | <u>13</u> | <u>8</u> | 1.00 | 100 | Comparative Example |
| 16 | 0 | 0 | 0 | 0.005 | 0.002 | 32 | 27 | 1.25 | 100 | Comparative Example |
| 17 | 0 | 0 | 0 | 0.005 | 0.002 | 34 | 23 | 0.53 | 100 | Comparative Example |
| 18 | 0 | 0 | 0 | 0.005 | 0.003 | 30 | 23 | 1.30 | 100 | Comparative Example |

[Table 3]

| Table 2 | | |
|---|---|---|
| Number | Evaluation | |
| | Strength at 800°C | Drawing value at 800°C |
| 1 | Acceptable | Acceptable |
| 2 | Acceptable | Acceptable |
| 3 | Acceptable | Acceptable |
| 4 | Acceptable | Acceptable |
| 5 | Acceptable | Acceptable |
| 6 | Acceptable | Acceptable |
| 7 | Acceptable | Acceptable |
| 8 | Acceptable | Acceptable |
| 9 | Acceptable | Acceptable |
| 10 | Acceptable | Acceptable |
| 11 | Unacceptable | Unacceptable |
| 12 | Unacceptable | Unacceptable |
| 13 | Unacceptable | Unacceptable |
| 14 | Unacceptable | Unacceptable |
| 15 | Unacceptable | Unacceptable |

(continued)

| Table 2 | | |
| --- | --- | --- |
| Number | Evaluation | |
| | Strength at 800°C | Drawing value at 800°C |
| 16 | Unacceptable | Unacceptable |
| 17 | Unacceptable | Unacceptable |
| 18 | Unacceptable | Unacceptable |

The steel materials in Invention Examples are found to be excellent in easy working at high temperature.

The present embodiment includes the following aspects.

<1> A steel material, including a chemical composition including, in terms of percentage by mass with respect to a total mass of the steel material:

from 0 to 0.650% of C,
from 0.03 to 0.50% of Si,
from 5 to 30% of Mn,
from 0 to 0.050% of P,
from 0 to 0.050% of S,
from 0 to 5.0% of Cu,
from 5 to 30% of Ni,
from 0 to 10% of Cr,
from 0 to 10% of Mo,
from 0 to 1.00% of Nb,
from 0 to 1.00% of V,
from 0 to 1.0% of Co,
from 0 to 10% of W,
from 0 to 1.00% of Pb,
from 0 to 1.00% of Sn,
from 0 to 0.10% of Al,
from 0 to 0.10% of Ti,
from 0 to 0.100% of B,
from 0 to 0.500% of N,
from 0.001 to 0.010% of O, and
a balance of Fe and impurities,
wherein the following Formula (a), Formula (b), and Formula (c-1) are satisfied:

$$[Ni] + [Mn] + [Cr] \geq 15 \qquad \text{Formula (a);}$$

$$[Ni] + [Mn] \geq 15 \qquad \text{Formula (b)}$$

; and

$$[Ni]/[Mn] \geq 0.20 \qquad \text{Formula (c-1)}$$

wherein, in Formula (a), Formula (b), and Formula (c-1), an amount of nickel in the steel material is designated [Ni], an amount of manganese in the steel material is designated [Mn], and an amount of chromium in the steel material is designated [Cr].

<2> The steel material according to <1>, wherein the steel material includes, in terms of percentage by mass with respect to the total mass of the steel material, at least one of:

from 0.001 to 0.050% of P,
from 0.0002 to 0.050% of S,
from 0.03 to 5.0% of Cu,

from 0.02 to 10% of Cr,
from 0.02 to 10% of Mo,
from 0.003 to 1.00% of Nb,
from 0.003 to 1.00% of V,
from 0.002 to 1.00% of Pb,
from 0.002 to 1.00% of Sn,
from 0.001 to 0.10% of Al,
from 0.002 to 0.10% of Ti,
from 0.0002 to 0.100% of B, or
from 0.0020 to 0.500% of N.

<3> The steel material according to <1> or <2>, wherein the steel material includes, in terms of percentage by mass with respect to the total mass of the steel material, at least one of:

from 0 to 0.190% of C,
from 0.03 to 0.48% of Si,
from 5.2 to 30% of Mn,
from 6.2 to 30% of Ni, or
from 0.02 to 10% of Cr.

<4> The steel material according to any one of <1> to <3>, wherein the steel material includes, in terms of percentage by mass with respect to the total mass of the steel material, at least one of:

from 5 to 20% of Mn, or
from 0 to 7% of Cr.

<5> The steel material according to any one of <1> to <4>, wherein the following Formula (c-2): is satisfied:

$$[Ni]/[Mn] \geq 0.70 \qquad \text{Formula (c-2).}$$

<6> The steel material according to any one of <1> to <5>, wherein the steel material is a steel ingot, a band steel, or a wire rod.
<7> The steel material according to <6>, wherein the steel material is a wire rod having a diameter of from 1.0 to 10.0 mm.
<8> The steel material according to <6>, wherein the steel material is a band steel having a sheet thickness of from 0.5 to 2.0 mm.
<9> A solid wire, including a chemical composition including, in terms of percentage by mass with respect to a total mass of the solid wire:

from 0 to 0.650% of C,
from 0.03 to 0.50% of Si,
from 5 to 30% of Mn,
from 0 to 0.050% of P,
from 0 to 0.050% of S,
from 0 to 5.0% of Cu,
from 5 to 30% of Ni,
from 0 to 10% of Cr,
from 0 to 10% of Mo,
from 0 to 1.00% of Nb,
from 0 to 1.00% of V,
from 0 to 1.0% of Co,
from 0 to 10% of W,
from 0 to 1.00% of Pb,
from 0 to 1.00% of Sn,
from 0 to 0.10% of Al,
from 0 to 0.10% of Ti,
from 0 to 0.100% of B,
from 0 to 0.500% of N,

from 0.001 to 0.010% of O, and
a balance of Fe and impurities,
wherein the following Formula (a), Formula (b), and Formula (c-1) are satisfied:

$$[Ni] + [Mn] + [Cr] \geq 15 \qquad \text{Formula (a);}$$

$$[Ni] + [Mn] \geq 15 \qquad \text{Formula (b)}$$

; and

$$[Ni]/[Mn] \geq 0.20 \qquad \text{Formula (c-1)}$$

wherein, in Formula (a), Formula (b), and Formula (c-1), an amount of nickel in the solid wire is designated [Ni], an amount of manganese in the solid wire is designated [Mn], and an amount of chromium in the solid wire is designated [Cr].

<10> A steel sheath for a flux cored wire, the steel sheath including a chemical composition including, in terms of percentage by mass with respect to a total mass of the steel sheath:

from 0 to 0.650% of C,
from 0.03 to 0.50% of Si,
from 5 to 30% of Mn,
from 0 to 0.050% of P,
from 0 to 0.050% of S,
from 0 to 5.0% of Cu,
from 5 to 30% of Ni,
from 0 to 10% of Cr,
from 0 to 10% of Mo,
from 0 to 1.00% of Nb,
from 0 to 1.00% of V,
from 0 to 1.0% of Co,
from 0 to 10% of W,
from 0 to 1.00% of Pb,
from 0 to 1.00% of Sn,
from 0 to 0.10% of Al,
from 0 to 0.10% of Ti,
from 0 to 0.100% of B,
from 0 to 0.500% of N,
from 0.001 to 0.010% of O, and
a balance of Fe and impurities,
wherein the following Formula (a), Formula (b), and Formula (c-1) are satisfied:

$$[Ni] + [Mn] + [Cr] \geq 15 \qquad \text{Formula (a);}$$

$$[Ni] + [Mn] \geq 15 \qquad \text{Formula (b)}$$

; and

$$[Ni]/[Mn] \geq 0.20 \qquad \text{Formula (c-1)}$$

wherein, in Formula (a), Formula (b), and Formula (c-1), an amount of nickel in the steel sheath is designated [Ni], an amount of manganese in the steel sheath is designated [Mn], and an amount of chromium in the steel sheath is designated [Cr].

The entire disclosure of Japanese Patent Application No. 2022-187799 is incorporated herein by reference.
All the literature, patent application, and technical standards cited herein are also herein incorporated to the same extent as provided for specifically and severally with respect to an individual literature, patent application, and technical standard to the effect that the same should be so incorporated by reference.

**Claims**

1. A steel material, comprising a chemical composition comprising, in terms of percentage by mass with respect to a total mass of the steel material:

   from 0 to 0.650% of C,
   from 0.03 to 0.50% of Si,
   from 5 to 30% of Mn,
   from 0 to 0.050% of P,
   from 0 to 0.050% of S,
   from 0 to 5.0% of Cu,
   from 5 to 30% of Ni,
   from 0 to 10% of Cr,
   from 0 to 10% of Mo,
   from 0 to 1.00% of Nb,
   from 0 to 1.00% of V,
   from 0 to 1.0% of Co,
   from 0 to 10% of W,
   from 0 to 1.00% of Pb,
   from 0 to 1.00% of Sn,
   from 0 to 0.10% of Al,
   from 0 to 0.10% of Ti,
   from 0 to 0.100% of B,
   from 0 to 0.500% of N,
   from 0.001 to 0.010% of O, and
   a balance of Fe and impurities,
   wherein the following Formula (a), Formula (b), and Formula (c-1) are satisfied:

   $$[Ni] + [Mn] + [Cr] \geq 15 \qquad \text{Formula (a);}$$

   $$[Ni] + [Mn] \geq 15 \qquad \text{Formula (b)}$$

   ; and

   $$[Ni]/[Mn] \geq 0.20 \qquad \text{Formula (c-1)}$$

   wherein, in Formula (a), Formula (b), and Formula (c-1), an amount of nickel in the steel material is designated [Ni], an amount of manganese in the steel material is designated [Mn], and an amount of chromium in the steel material is designated [Cr].

2. The steel material according to claim 1, wherein the steel material includes, in terms of percentage by mass with respect to the total mass of the steel material, at least one of:

   from 0.001 to 0.050% of P,
   from 0.0002 to 0.050% of S,
   from 0.03 to 5.0% of Cu,
   from 0.02 to 10% of Cr,
   from 0.02 to 10% of Mo,
   from 0.003 to 1.00% of Nb,
   from 0.003 to 1.00% of V,
   from 0.002 to 1.00% of Pb,
   from 0.002 to 1.00% of Sn,
   from 0.001 to 0.10% of Al,
   from 0.002 to 0.10% of Ti,
   from 0.0002 to 0.100% of B, or
   from 0.002 to 0.500% of N.

3. The steel material according to claim 1 or 2, wherein the steel material includes, in terms of percentage by mass with respect to the total mass of the steel material, at least one of:

from 0 to 0.190% of C,
from 0.03 to 0.48% of Si,
from 5.2 to 30% of Mn,
from 6.2 to 30% of Ni, or
from 0.02 to 10% of Cr.

4. The steel material according to claim 1 or 2, wherein the steel material includes, in terms of percentage by mass with respect to the total mass of the steel material, at least one of:

from 5 to 20% of Mn, or
from 0 to 7% of Cr.

5. The steel material according to claim 1 or 2, wherein the following Formula (c-2) is satisfied:

$$[Ni]/[Mn] \geq 0.70 \qquad \text{Formula (c-2).}$$

6. The steel material according to claim 1 or 2, wherein the steel material is a steel ingot, a band steel, or a wire rod.

7. The steel material according to claim 6, wherein the steel material is a wire rod having a diameter of from 1.0 to 10.0 mm.

8. The steel material according to claim 6, wherein the steel material is a band steel having a sheet thickness of from 0.5 to 2.0 mm.

9. A solid wire, comprising a chemical composition comprising, in terms of percentage by mass with respect to a total mass of the solid wire:

from 0 to 0.650% of C,
from 0.03 to 0.50% of Si,
from 5 to 30% of Mn,
from 0 to 0.050% of P,
from 0 to 0.050% of S,
from 0 to 5.0% of Cu,
from 5 to 30% of Ni,
from 0 to 10% of Cr,
from 0 to 10% of Mo,
from 0 to 1.00% of Nb,
from 0 to 1.00% of V,
from 0 to 1.0% of Co,
from 0 to 10% of W,
from 0 to 1.00% of Pb,
from 0 to 1.00% of Sn,
from 0 to 0.10% of Al,
from 0 to 0.10% of Ti,
from 0 to 0.100% of B,
from 0 to 0.500% of N,
from 0.001 to 0.010% of O, and
a balance of Fe and impurities,
wherein the following Formula (a), Formula (b), and Formula (c-1) are satisfied:

$$[Ni] + [Mn] + [Cr] \geq 15 \qquad \text{Formula (a);}$$

$$[Ni] + [Mn] \geq 15 \qquad \text{Formula (b)}$$

; and

$$[Ni]/[Mn] \geq 0.20 \qquad \text{Formula (c-1)}$$

wherein, in Formula (a), Formula (b), and Formula (c-1), an amount of nickel in the solid wire is designated [Ni], an amount of manganese in the solid wire is designated [Mn], and an amount of chromium in the solid wire is designated [Cr].

10. A steel sheath for a flux cored wire, the steel sheath comprising a chemical composition comprising, in terms of percentage by mass with respect to a total mass of the steel sheath:

from 0 to 0.650% of C,
from 0.03 to 0.50% of Si,
from 5 to 30% of Mn,
from 0 to 0.050% of P,
from 0 to 0.050% of S,
from 0 to 5.0% of Cu,
from 5 to 30% of Ni,
from 0 to 10% of Cr,
from 0 to 10% of Mo,
from 0 to 1.00% of Nb,
from 0 to 1.00% of V,
from 0 to 1.0% of Co,
from 0 to 10% of W,
from 0 to 1.00% of Pb,
from 0 to 1.00% of Sn,
from 0 to 0.10% of Al,
from 0 to 0.10% of Ti,
from 0 to 0.100% of B,
from 0 to 0.500% of N,
from 0.001 to 0.010% of O, and
a balance of Fe and impurities,
wherein the following Formula (a), Formula (b), and Formula (c-1) are satisfied:

$$[Ni] + [Mn] + [Cr] \geq 15 \qquad \text{Formula (a);}$$

$$[Ni] + [Mn] \geq 15 \qquad \text{Formula (b)}$$

; and

$$[Ni]/[Mn] \geq 0.20 \qquad \text{Formula (c-1)}$$

wherein, in Formula (a), Formula (b), and Formula (c-1), an amount of nickel in the steel sheath is designated [Ni], an amount of manganese in the steel sheath is designated [Mn], and an amount of chromium in the steel sheath is designated [Cr].

## INTERNATIONAL SEARCH REPORT

| International application No. |
|---|
| **PCT/JP2023/041863** |

### A. CLASSIFICATION OF SUBJECT MATTER

***B23K 35/30***(2006.01)i
FI:   B23K35/30 320A; B23K35/30 A

According to International Patent Classification (IPC) or to both national classification and IPC

### B. FIELDS SEARCHED

Minimum documentation searched (classification system followed by classification symbols)

   B23K35/30

Documentation searched other than minimum documentation to the extent that such documents are included in the fields searched

   Published examined utility model applications of Japan 1922-1996
   Published unexamined utility model applications of Japan 1971-2024
   Registered utility model specifications of Japan 1996-2024
   Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2022/113473 A1 (JFE STEEL CORPORATION) 02 June 2022 (2022-06-02) paragraphs [0056], [0066] | 1-4, 6-7, 9 |
| Y | paragraphs [0056], [0066] | 8, 10 |
| A | paragraphs [0056], [0066] | 5 |
| Y | JP 2007-105733 A (NIPPON STEEL & SUMIKIN STAINLESS STEEL CORP.) 26 April 2007 (2007-04-26) paragraph [0023] | 8, 10 |
| Y | JP 6621572 B1 (JFE STEEL CORPORATION) 18 December 2019 (2019-12-18) paragraph [0040] | 8, 10 |
| X | JP 62-110894 A (KABUSHIKI KAISHA KOBE SEIKO SHO) 21 May 1987 (1987-05-21) table 1 | 1-7, 9 |
| A | entire text | 8, 10 |

☑ Further documents are listed in the continuation of Box C.      ☑ See patent family annex.

| | | |
|---|---|---|
| * | Special categories of cited documents: | "T"   later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X"   document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&"   document member of the same patent family |
| "P" | document published prior to the international filing date but later than the priority date claimed | |

| Date of the actual completion of the international search | Date of mailing of the international search report |
|---|---|
| **06 February 2024** | **13 February 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**EP 4 624 090 A1**

## INTERNATIONAL SEARCH REPORT

| International application No. |
| --- |
| **PCT/JP2023/041863** |

**C.      DOCUMENTS CONSIDERED TO BE RELEVANT**

| Category* | Citation of document, with indication, where appropriate, of the relevant passages | Relevant to claim No. |
| --- | --- | --- |
| X | JP 7-305145 A (NIPPON YAKIN KOGYO COMPANY, LIMITED) 21 November 1995 (1995-11-21) <br> paragraphs [0026], [0027] | 1-6 |
| A | entire text, all drawings | 7-10 |
| X | JP 2001-172746 A (HITACHI METALS LTD) 26 June 2001 (2001-06-26) <br> paragraphs [0001], [0025]-[0028] | 1-6, 8 |
| A | entire text | 7, 9-10 |
| X | JP 2018-162507 A (NIPPON STEEL & SUMITOMO METAL CORPORATION) 18 October 2018 (2018-10-18) <br> paragraph [0061] | 1-6 |
| A | entire text | 7-10 |

Form PCT/ISA/210 (second sheet) (July 2022)

## INTERNATIONAL SEARCH REPORT
### Information on patent family members

International application No.

**PCT/JP2023/041863**

| Patent document cited in search report | | | Publication date (day/month/year) | Patent family member(s) | | | Publication date (day/month/year) |
|---|---|---|---|---|---|---|---|
| WO | 2022/113473 | A1 | 02 June 2022 | US | 2024/0003367 | A1 | |
| | | | | paragraphs [0077], [0085] | | | |
| | | | | EP | 4252959 | A1 | |
| | | | | KR | 10-2023-0070296 | A | |
| | | | | CN | 116529407 | A | |
| JP | 2007-105733 | A | 26 April 2007 | (Family: none) | | | |
| JP | 6621572 | B1 | 18 December 2019 | US | 2021/0323101 | A1 | |
| | | | | paragraph [0075] | | | |
| | | | | WO | 2020/039643 | A1 | |
| | | | | EP | 3838474 | A1 | |
| | | | | KR | 10-2021-0033519 | A | |
| | | | | CN | 112566750 | A | |
| JP | 62-110894 | A | 21 May 1987 | (Family: none) | | | |
| JP | 7-305145 | A | 21 November 1995 | (Family: none) | | | |
| JP | 2001-172746 | A | 26 June 2001 | US | 6562153 | B1 | |
| | | | | p. 2, left column, lines 6-12, p. 5, right column, line 3 to p. 6, left column, line 54 | | | |
| | | | | EP | 1091006 | A1 | |
| JP | 2018-162507 | A | 18 October 2018 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008246507 A
- WO 2020039643 A
- JP 2018126789 A
- JP 2013103232 A
- JP H10166179 A
- JP H7314178 A
- JP S62197294 A
- JP 2022187799 A